# EUROPEAN PATENT SPECIFICATION

(11) **EP 2 256 690 B1**
(45) Date of publication and mention of the grant of the patent: **17.08.2016**
(21) Application number: 09161520.3
(22) Date of filing: 29.05.2009
(51) Int. Cl.: G06T 7/20

(54) **Object motion detection system based on combining 3D warping techniques and a proper object motion detection**
Objektbewegungsdetektionssystem, das auf der Kombination von dreidimensionalen Krümmungstechniken und einer eigentlichen Objektbewegungsdetektion basiert
Système de détection de mouvement d'objets basée sur la combinaison de techniques de déformation 3D et la détection de mouvement d'objets à proprement parler

(43) Date of publication of application: 01.12.2010
(73) Proprietor: Honda Research Institute Europe GmbH, 63073 Offenbach/Main (DE)
(72) Inventor: Michalke, Thomas, 70195 Stuttgart (DE); Kastner, Robert, 60388 Frankfurt (DE)
(74) Representative: Rupp, Christian

(56) References cited:
- EP-A- 1 361 543
- WO-A-2009/024349
- SCHMUDDERICH J ET AL: "Estimating Object Proper Motion Using Optical Flow, Kinematics, and Depth Information" IEEE TRANSACTIONS ON SYSTEMS, MAN AND CYBERNETICS. PART B:CYBERNETICS, IEEE SERVICE CENTER, PISCATAWAY, NJ, US, vol. 38, no. 4, 1 August 2008 (2008-08-01), pages 1139-1151, XP011231411 ISSN: 1083-4419
- SANAE SHIMIZU ET AL: "Moving object detection by mobile Stereo Omni-directional System (SOS) using spherical depth image" PATTERN ANALYSIS AND APPLICATIONS, SPRINGER-VERLAG, LO, vol. 9, no. 2-3, 8 November 2005 (2005-11-08), pages 113-126, XP019431599 ISSN: 1433-755X
- CUTLER R ET AL: "View-based interpretation of real-time optical flow for gesture recognition" AUTOMATIC FACE AND GESTURE RECOGNITION, 1998. PROCEEDINGS. THIRD IEEE INTERNATIONAL CONFERENCE ON NARA, JAPAN 14-16 APRIL 1998, LOS ALAMITOS, CA, USA,IEEE COMPUT. SOC, US, 14 April 1998 (1998-04-14), pages 416-421, XP010277596 ISBN: 978-0-8186-8344-2
- W. SCHAARSCHMIDT, J. SAVAGE: "Key gesture spotting for a mobile robot" INTERNATIONAL SYMPOSIUM ON ROBOTICS AND AUTOMATION (ISRA), 2004, pages 1-6, XP002543567
- BERTOZZI M ET AL: "Obstacle detection and classification fusing radar and vision" INTELLIGENT VEHICLES SYMPOSIUM, 2008 IEEE, IEEE, PISCATAWAY, NJ, USA, 4 June 2008 (2008-06-04), pages 608-613, XP031318949 ISBN: 978-1-4244-2568-6
- THOMAS MICHALKE ET AL: "A Generic Temporal Integration Approach for Enhancing Feature-based Road-detection Systems" INTELLIGENT TRANSPORTATION SYSTEMS, 2008. ITSC 2008. 11TH INTERNATIONAL IEEE CONFERENCE ON, IEEE, PISCATAWAY, NJ, USA, 12 October 2008 (2008-10-12), pages 657-663, XP031383385 ISBN: 978-1-4244-2111-4
- TALUKDER A ET AL: "Real-time detection of moving objects from moving vehicles using dense stereo and optical flow" INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, vol. 4, 28 September 2004 (2004-09-28), pages 3718-3725, XP010766267 ISBN: 978-0-7803-8463-7
- K. KONOLIGE: "Small vision systems: Hardware and implementation" EIGHTH INTERNATIONAL SYMPOSIUM ON ROBOTICS RESEARCH, 1997, XP002543568
- MARCOS NIETO ET AL: "Stabilization of Inverse Perspective Mapping Images based on Robust Vanishing Point Estimation" INTELLIGENT VEHICLES SYMPOSIUM, 2007 IEEE, IEEE, PI, 1 June 2007 (2007-06-01), pages 315-320, XP031126963 ISBN: 978-1-4244-1067-5

## Description

### Field of Invention

The present invention generally relates to artificial (automated) vision-based object motion detection systems which can be employed e.g. for "driver" assistance systems (for cars, motorbikes, planes, boats, trains,...) or autonomous robots.

The invention relies on a combination of techniques for detecting dynamic (i.e., moving) objects based on visual information and depth information and can be deployed in driver assistance systems.

Driver assistance systems are control systems for vehicles or intelligent vehicle technologies that aim at increasing the comfort and safety of traffic participants. Potential applications of such systems include lane departure warning, lane keeping, collision warning or avoidance, adaptive cruise control and low speed automation in congested traffic.

Driver assistance systems in the context of the present invention can thereby output scene-analysis information to a driver, "assist" an action triggered or performed by a driver, but can also autonomously start and carry out a control action for the vehicle.

The driver assistance system can be provided with information on the environment of the vehicle, the status of the vehicle and the driver.

The application of the invention, which will be used for illustration purposes in the present specification, is the car domain. However, the invention is not limited to this, but can also be applied to other domains as airplanes in the take off or landing phase or for mobile, especially autonomous robots. Also in these domains the detection of dynamic objects is of vital importance for safe operation.

### Background of the invention

Driver assistance systems are known to operate with and in the vicinity of human beings, which leads to high safety requirements, when a driver assistance system is able to make decisions and autonomously generate behavior (e.g., autonomous braking after the detection of an obstacle on the lane). The vehicle domain can be subdivided into dynamic (e.g., cars, bicycles) and static objects respectively static scene elements (e.g., parking cars, road, buildings).

For all static scene elements the system has to cope with the inaccuracy of measurements (i.e., the sensor variances), for whose compensation a number of efficient, well-known approaches exist (e.g., Kalman filter [1] for making approaches more robust that rely on noisy input data, as, e.g., model-based lane marking detection systems [2]).

For dynamic scene elements in addition to the handling of sensor variances the object induced motion must be taken into account. In the following, the motion of such dynamic objects will be called "object motion", as opposed to the "vehicle ego motion" of the car that carries an ADAS (Advanced Driver Assistance System) and sensory devices.

Said dynamic objects are highly relevant for a driver assistance system, since unexpected motion of dynamic objects can result in dangerous situations that might injure humans. Hence, approaches which robustly gather information about dynamic scene elements are highly relevant for driver assistance systems.

Once the scene is subdivided into static and dynamic scene elements for all dynamic objects the object motion can be modeled in order to incorporate it into the behavior generation and planning of the driver assistance system (e.g., usage of dedicated motion models for estimating the trajectories of dynamic object and including them into the collision mitigation module). In the following, the existing approaches for detecting object motion will be grouped into 3 classes:
1. Simple basic approaches,
2. Approaches based on optical flow and
3. The 3D Warping approach.

Also, the following documents relate to the invention: WO 2009/024349 A; Schmudderich J. et al: "Estimating Object Proper Motion Using Optical Flow, Kinematics, and Depth Information", IEEE Transactions on Systems, Man and Cybernetics, ISSN: 1083-4419; Sanae Shimizu et al: "Moving object detection by mobile Stereo Omni-directional System (SOS) using spherical depth image", Pattern Analysis and Applications, Springer-Verlag, LO, vol. 9, no. 2-3, 8 November 2005 ISSN: 1433-755X; Cutler R. et al: "View-based interpretation of real-time optical Ilow for gesture recognition", Automatic Face and Gesture Recognition, ISBN: 978-0-8186-8344-2; W. Schaarschmidt, J. Savage: "Key gesture spotting for a mobile robot", International Symposium on Robotics and Automation (ISRA), 2004, pages 1-6.

### Simple basic approaches

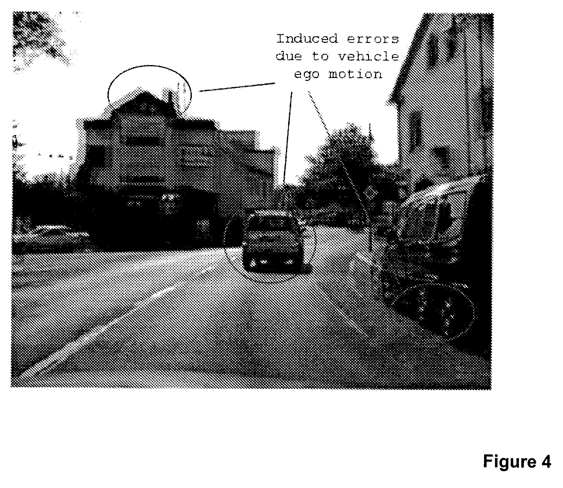

Vision-based approaches in the surveillance domain use *differential images* for detecting dynamic objects. Here, an image at time t is subtracted by the one at time t-1. But in case of strong ego motion of the camera (as typically present in the car domain) differential images cannot reliably detect dynamic objects, as it is shown in Figure 4. The vehicle ego motion causes a change in nearly all image pixel positions, making a reliable separation between vehicle ego motion and object motion impossible.

A method which only uses disparity as information is described in [8]. The algorithm integrates two consecutive disparity frames based on a pixel-wise Kalman filtering method. Additionally, the change of disparity (i.e. position change in depth direction) is added in the process model of the Kalman filter. However, no lateral and vertical movements can be modeled. The approach is targeted at improving the depth information, trying to solve the problem that disparity-based approaches generate incorrect depth estimates for moving objects. Summarizing, the approach aims at gathering a dense depth map, with reduced errors by applying temporal integration. As a byproduct, dynamic objects can be detected, but only in case no lateral object motion takes places on the image plane.

### Optical flow (Proper Object Motion detection)

Other approaches [6] combine the *optical flow* with the disparity map of a stereo camera system based on Kalman filters, which provides the 3D position and 3D velocity of single points in the image. These single points are used to compute the ego motion of the camera vehicle over multiple frames. However, the motion of other objects is computed based on optical flow computation between a predicted 2D warped pixel image and the current image. Another approach, which uses the optical flow to estimate dynamic objects, is the so-called Proper Object Motion (POM) described in [7]. Here, the current image, at time t, is pixel-wisely back projected to the image at time t-1, taken the known ego movement into account and assuming that the overall scene is static. Afterwards the optical flow is computed between the image captured at t-1 and the back projected image t-1. The optical flow marks the position of dynamic objects present in the scene. These methods rely on the optical flow for object motion detection, hence searching for pixel-wise changes on the image plane. It is important to note, that the optical flow is resource-demanding as well as error prone, especially at the borders of the image. However, the central problem and flaw of the warping approach with optical flow is that only object motion lateral to the movement of the ego camera vehicle can be detected (e.g., a bicycle crossing the road in front). However, motion that is oriented longitudinal to the vehicle's course can not be detected, since there is no measurable lateral motion on the image plane and hence no optical flow is present (e.g., a vehicle driving on the road in front brakes hard and gets nearer). As shown later the drawbacks mentioned above will be resolved using the here described combination approach.

### 3D Warping

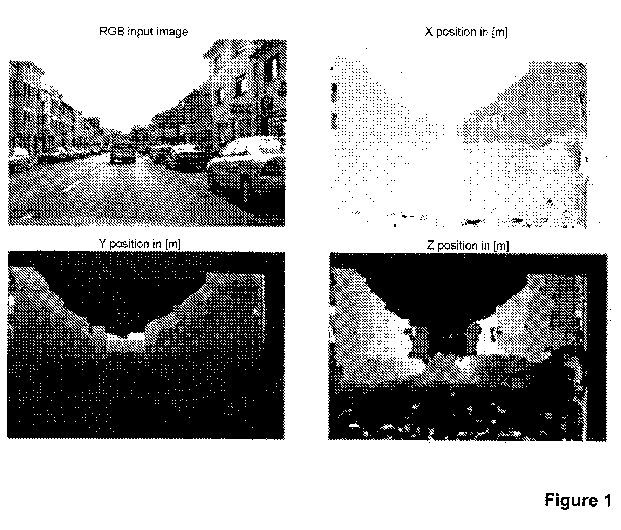

Another complementary method is the 3D warping approach, which is a procedure for detecting dynamic objects. The algorithm computes the magnitude of object motion based on sensors delivering 3D world coordinates (e.g., disparity information coming from stereo cameras [3] (see Figure 1 for the resulting 3D world maps), Photonic Mixer Device [4], or a dense laser scanner (e.g., the high definition Lidar sensor Velodyne [5])).

The detection of dynamic objects is based on the comparison of predicted (i.e., 3D warped) and measured 3D data of the scene. More specifically, in the 3D warping procedure the 3D world coordinates of the scene (containing static and dynamic objects) at one time step are transformed in a way that includes the motion of the ego vehicle in 3D coordinates. The 3D motion of the ego vehicle can be deduced from the longitudinal velocity and yaw rate of the vehicle, both accessible on the CAN bus, using a single track model. In the following, the procedures for the forward 3D warping (and backward 3D warping, set in brackets) are described. Both approaches have different advantages and drawbacks.

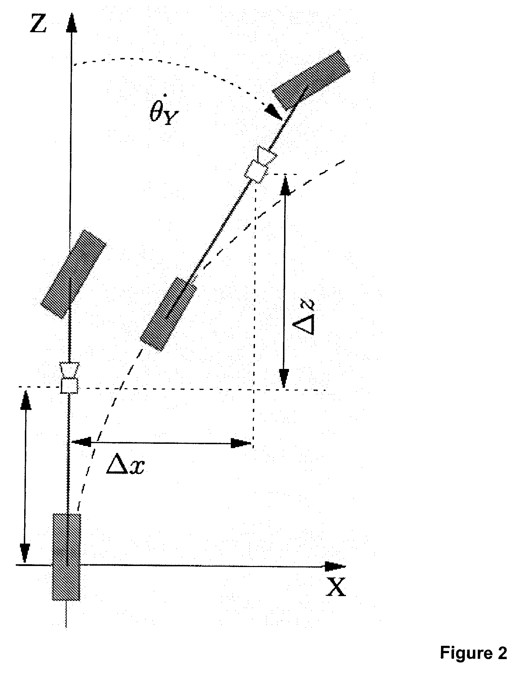

To be more precise, the 3D world coordinates at a time step are predicted into the future [backwards in time] under the assumption that all objects in the scene are static. The 3D world coordinates are predicted based on the measured ego vehicle motion induced longitudinal and lateral motion as well as yaw rate coming from a single track model (refer to Figure 2). The thereby predicted a priori 3D world position is compared to the measured a posteriori 3D world position in the next time step [previous time step]. The residuum of the comparison between 3D warped and real 3D world position marks all dynamic scene elements. The residuum is given in metric world coordinates (i.e., a 3D object motion induced position change). In order to get the corresponding pixel position (u,v) of the detected dynamic object (for a given 3D world position X,Y,Z) a pin hole camera model is used.

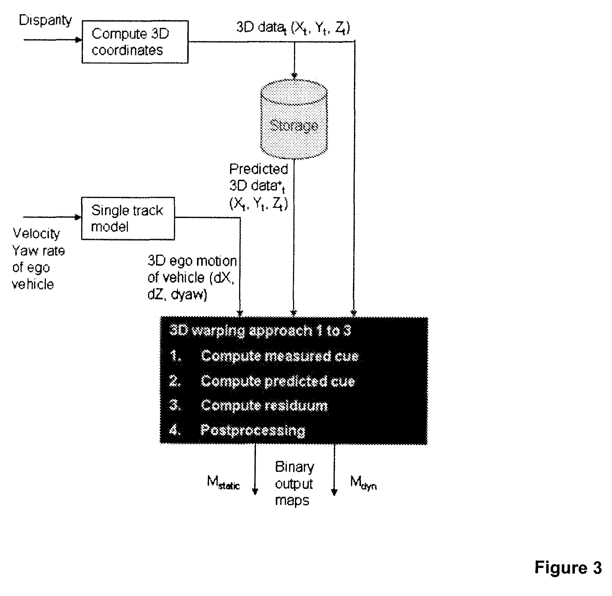

In the following, the 3D warping approach is described in detail, distinguishing 4 processing steps as visualized in Figure 3.

### a) Computing the measured cue

The approach described here uses dense 3D data as input. In this context, "dense" means that for the whole scene 3D data exists. To this end, any dense depth sensors can be used, as for example, a stereo camera system, a Photonic Mixer Device [4] or a dense laser scanner [5], as the only input of the system. Based on these sensors, the X, Y, and Z-maps (i.e., depth map) can be computed.

### b) Computing the predicted cue

The computation can be done in different ways, regarding the amount of processed data. Three different computational methods are proposed here, which are iconic-based, voxel-based, and envelope-based computation.

The first computational method runs completely *iconic* (i.e., all 3D voxels are handled independently). More specifically, this means that the known 3D positions of all known points in the environment are adapted taking the 3D vehicle ego motion into account. The adapted 3D position is used to 3D warp each point of the depth map independently. Then the predicted (3D warped) and the measured depth maps are compared to determine dynamic objects.

The second computational method builds up a *3D voxel cloud* (i.e., cloud of 3D segments) of the scene. Different from the first iconic approach a region based post-processing and modeling within the voxel cloud takes place. Thereby information from neighboring voxels is propagated and geometric 3D object models are introduced, which correct outlying voxels. These measures improve the overall accuracy of the approach.

The third computational method reduces the problem complexity by restricting the processing to one (or a few) surface (s) in the environment. In the car domain this could be the road surface. Only scene elements on this surface are considered. Based on this information an envelope is build up, which is called *environmental envelope,* reducing the complexity of the problem.

### c) Computing residuum

Computing the difference (residuum) between the measured cue and the predicted cue results in residuum maps that contain values at positions where dynamic objects are present. Moreover, from the residuum maps the relative motion of the dynamic object in 3D coordinates can be derived.

For methods 1 and 2 the X, Y, and Z residuum maps directly define image regions that hold dynamic objects as well as the magnitude of the object motion in X, Y, and Z direction. For method 3 the residual environmental envelope defines the motion of dynamic objects in X and Z direction only (height Y is defined as constant over the whole environmental envelope). For determining the corresponding image position all found dynamic objects are mapped from 3D (X,Y=const,Z) to the 2D image surface.

### d) Post-processing

In order to handle artifacts the described procedure might produce, morphological operations on the binarized residuum maps are carried out (see [10] for details on such morphological operations). This assures that only bigger image regions in a residuum map are interpreted as being dynamic.

The described computation methods have different advantages and drawbacks making them more or less applicable in different domains and applications, as summarized in the following Table 1. Table 2 summarizes the differences between existing pixel-based 2D warping procedures and the 3D warping approach on 3D coordinates.

**Table 1: Comparison of the proposed computation methods for detecting dynamic objects**

| | Optical flow based 2D warping | | | |
|---|---|---|---|---|
| | | Iconic | Voxel cloud 3D warping | Region based |
| | | 3D warping | | 3D warping |
| | | | | (environmental envelope) |
| Advantages | No camera parameters (calibration) necessary | Accurate | Very accurate | Fast |
| | | | | |
| | No further sensors necessary | Relative motion of detected objects in world coordinates is determined | | |
| | | Dynamic object moving in the direction of the ego vehicle can be detected | | |
| Drawback | Only objects with horizontal motion components | | Slow | Lower accuracy |
| | | | | |
| | Slow | Needs dense stereo data (vision based, PMD or laser scanner) | | |
| | Low accurateness | | | |

**Table 2: Conceptional differences between pixel based 2D warping with optical flow and 3D warping on 3D coordinates**

| Criterion | Optical flow based 2D warping (Proper Object Motion) | 3D warping on 3D coordinates |
|---|---|---|
| Input data | Consecutive images of a monocular camera, dense 3D data | Dense 3D data |
| Computational level | Pixels on the image | 3D world positions |
| Detectable object motion | Lateral object motion (i.e., orthogonal to the motion of ego camera vehicle) | Longitudinal and to a certain extend lateral object motion (i.e., motion in the direction of the ego camera vehicle and orthogonal to it). |
| Output data | Detected object motion in pixels on the image plane between two consecutive images | Detected object motion in 3D coordinates |

### Invention

The invention proposes an improved method for object motion detection using 3D data and visual information.

This object is achieved by means of the features of the independent claims. The dependent claims develop further the central idea of the present invention.

According to a first aspect a method is provided according to claim 1.

The information on the detected dynamic objects can be used for collision avoidance or path planning.

The 3D warping-based and the optical flow based object motion detection may be combined such that the search space of the respectively other detection is restricted and detection parameters are supplied to the respectively other detection.

The 3D warping based object motion detection may parameterize, e.g. as to the direction and amplitude, the optical flow based object motion recognition as to the regions with indicate the lateral motion of objects.

Only those regions in the 3D warping based object motion detection which indicates a lateral motion relative to the ego-motion may be processed selectively by the optical flow based object motion recognition.

The 3D warping-based and the optical flow based object motion detection may be combined such that the detection results of the respectively other detection method are refined and verified.

Information from a 3D depth sensor, such as e.g. rotating laser scanner can be used to generate sensor signals.

Information from a 2D depth sensor such as e.g. Photonic Mixer Device may be used to generate sensor signals.

Information from a 1D depth sensor (e.g., laser scanner) can be used, together with 2D vision signals, to generate 3D data.

A further aspect can relate to a driver assistance computing unit, designed to carry out a method as explained above.

Another aspect can relate to a vehicle being equipped with such a driver assistance computing unit.

Another aspect can relate to an autonomous robot being equipped with such a computing unit.

Further, a driver assistance system is provided according to claim 3.

Further features, objects and advantages of the present invention will become evident when going through the following detailed description of preferred embodiments of the present invention when taken in conjunction with the figures of the enclosed drawings.
Figure 1 shows dense 3D data of the scene,
Figure 2 explains a single track model,
Figure 3 shows a system overview 3D warping,
Figure 4 shows two consecutive images in superposition showing potential difficulties of differential images as feature for detecting dynamic objects,
Figure 5 gives a structural overview of a combination of POM and 3D-Warping, and
Figure 6 shows specific patterns for typical object movements in the vehicle domain. From left to right for each row, first and second are two consecutive camera images and third the 3D Warping residuum pattern for the movement. The color coding for the residuum pattern is the following: Red indicates a negative sign, blue a positive sign and the intensity of the color corresponds to the magnitude. The first row shows pure lateral movement, the second row pure longitudinal movement and the third row a mixture of both.

The invention combines the two approaches (3D Warping and Proper Object Motion "POM") in order to exploit their respective advantages while resolving the existing drawbacks.

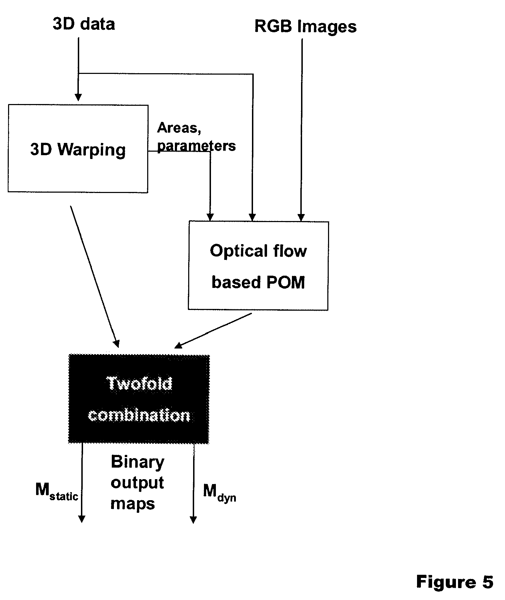

The invention thereby improves the rather broad and generic results gathered by the 3D Warping approach using a well-parameterized form of POM. Based on this a refinement and verification of the 3D Warping detection results can be achieved (see Figure 5 for a descriptive overview of the invention and table 3 for conceptional differences between 3DW (3D warping), POM and their combination). In the following, the proposed combination approach will be explained in more detail.

**Table 3: Conceptional differences between pixel based 2D warping with optical flow, 3D warping on 3D coordinates and the combination of both**

| Criterion | Optical flow based 2D warping (Proper Object Motion) | 3D warping on 3D coordinates | 3D Warping results verified and refined by POM |
|---|---|---|---|
| Input data | Consecutive images of a monocular camera, dense 3D data | Dense 3D data | Dense 3D data and |
| | | | Consecutive images of a monocular camera |
| Computational level | Pixels on the image | 3D world positions | First 3D world positions, second pixels on the image for defined areas |
| Detectable object motion | Lateral object motion (i.e., orthogonal to the motion of ego camera vehicle) | Longitudinal and to a certain extend lateral object motion (i.e., motion in the direction of the ego camera vehicle and orthogonal to it). | First, Longitudinal and to a certain extend lateral object motion. |
| | | | Second, refinement of Lateral object motion |
| Output data | Detected object motion in pixels on the image plane between two consecutive images | Detected object motion in 3D coordinates | Detected object motion in 3D coordinates and for refined areas object motion in pixels on the image plane between two consecutive images |

### 3D Warping results verified and refined by POM

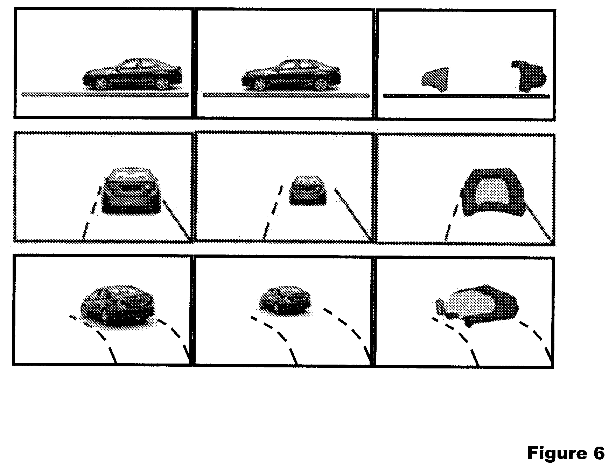

In order to detect dynamic objects, the 3D Warping approach computes the residuum between predicted and measured 3D coordinates. The residuum shows high values at scene points that contain dynamic objects. These high values are ordered in specific patterns dependent on the type of object motion (lateral, longitudinal, mixed, see Figure 6 for visualization).

While the trajectory of longitudinal object motion can be inferred rather directly from its specific longitudinal residuum pattern, lateral motion components need to be inferred indirectly from its specific lateral pattern. Here the proposed combination of the 3D Warping with POM has particular advantages. More specifically, patterns that indicate lateral motion can be post-processed by POM. For this purpose, the computationally intensive POM can be restricted to a certain image area based on the 3D Warping results. Furthermore, the POM is parameterised optimally based on these patterns (the direction and expected amplitude of the optical flow is heavily restricted). Based on POM, the correspondence problem of the 3D Warping residuum for lateral motion is solved and a 3D object trajectory can be computed.

Furthermore, the POM can be used for a verification of the noisy 3D Warping results. The noise is due to error-prone depth measurements that typically contain numerous artifacts, which result in false-positive object motion measurements. Additionally, the resolution of the residuum is rather small, which is sufficient for the detection of a certain pattern, but insufficient for inferring the specific object motion trajectory. To this end, POM can be used for the refinement of the motion trajectory.

Summarizing, the described combination approach leads to a number of advantages that improve existing approaches in the following points:
- The optical-flow-based POM approach is in general resource demanding. The 3D Warping is used to preselect the parts of the scene, on which the POM is computed on. This reduces the computation time and increases the quality.
- Furthermore the POM is parameterized optimally based on the 3D Warping results, which lowers the computational demands of the POM-based verification process.
- Known optical flow-based approaches are restricted to the detection of object motion that is orthogonal to the ego vehicle motion (lateral motion). In the opposite, 3D Warping is targeted at the detection of longitudinal object motion. Different from that the proposed approach combines both, allowing the precise detection of object motion in lateral and longitudinal direction in an optimal way.
- Different from optical flow-based approaches that detect object motion on the image plane (i.e., in pixels in the perspective image), the 3D Warping approach, delivers information of the object motion in 3D world coordinates (i.e., direction and magnitude in meters). However, also the detected object motion in pixels in the image delivers precious information for typical image processing algorithms. The here proposed algorithm combines the prediction of pixel-wise motion of image pixels (called warping) and the prediction of 3D world coordinates directly.

### Literature:

[1] R. E. Kalman, "A new approach to linear filtering and prediction problems," Transactions of the ASME-Journal of Basic Engineering, vol. 82, no. Series D, pp. 35-45, 1960.
[2] M. Nieto, L. Salgado, F. Jaureguizar, and J. Cabrera, "Stabilization of inverse perspective mapping images based on robust vanishing point estimation," in IEEE Intelligent Vehicles Symposium, 6 2007.
[3] K. Konolige, "Small vision system: Hardware and implementation," in Eighth International Symposium on Robotics Research, 1997.
[4] Xuming Luan, "Experimental Investigation of Photonic Mixer Device and Development of TOF 3D Ranging Systems Based on PMD Technology", PHD Thesis, 2001.
[5] www.velodyne.com/lidar
[6] H. Badino, U. Franke, C. Rabe and S. Gehrig. "Stereo Vision-Based Detection of Moving Objects under Strong Camera Motion". In 1st International Conference on Computer Vision Theory and Applications (VISAPP), Setúbal, Portugal. 25 - 28 February, 2006.
[7] J. Schmüdderich, V. Willert, J. Eggert, S. Rebhan, C. Goerick, G. Sagerer and E. Körner. "Estimating object proper motion using optical flow, kinematics, and depth information" in IEEE Transactions on Systems, Man and Cybernetics, Part B, Volume 38, Issue 4, Pages 1139 - 1151, 2008.
[8] T. Vaudrey, H. Badino and S. Gehrig "Integrating Disparity Images by Incorporating Disparity Rate". In 2nd Workshop "Robot Vision", Auckland, New Zealand, February 18 - 20, 2008.
[9] I.N. Bronstein, K.A. Semendjajew, G. Musiol and H. Mühlig, "Taschenbuch der Mathematik", Verlag Harri Deutsch, Frankfurt am Main, 1999.
[10] B. Jaehne, "Digital image processing", Springer, Berlin, 2005.

## Claims

1. A method for detecting dynamic objects in a visually sensed scene of a driver assistance system of a vehicle or robot with ego-motion, comprising the steps of:
- providing visual signals of an environment by a vision sensor delivering dense 3D world coordinate data, said vision sensor being attached to the vehicle or robot with ego-motion,
- detecting proper motion of dynamic objects on an input field of the vision sensor based on a detected optical flow, **characterized by** the steps of
- detecting the motion of dynamic objects by using a 3D warping on the basis of predicted and sensed dense 3D world coordinate data, the predicted dense 3D world coordinate data being generated based on measured dense 3D world coordinate data, data representing the ego-motion and a region based post-processing and modeling within a 3D voxel cloud, and
- combining the 3D warping-based and the optical flow based object motion detection,
- wherein the 3D warping based object motion detection parameterizes, as to the direction and amplitude, the optical flow based object motion detection as to the regions indicating lateral motion of objects relative to the ego-motion, and
- wherein only the regions in the 3D warping based object motion detection which indicate a lateral motion relative to the ego-motion are processed selectively by the optical flow based object motion detection, and
- storing information on the detected dynamic objects and their measured motion parameters.

2. The method according to claim 1,
wherein the information on the detected dynamic objects is used for collision avoidance or path planning.

3. A driver assistance system of a vehicle or robot with ego-motion, comprising:
- means for providing visual signals of an environment by a vision sensor delivering dense 3D world coordinate data, said vision sensor being attached to the vehicle or robot with ego-motion,
- computing means detecting proper motion on an input field of the vision sensor based on a detected optical flow,
**characterized by**
- computing means for detecting the motion of dynamic objects by using a 3D warping on the basis of predicted and sensed dense 3D world coordinate data, the predicted dense 3D world coordinate data being generated based on measured dense 3D world coordinate data, data representing the ego-motion and a region based post-processing and modeling within a 3D voxel cloud, and
- computing means for combining the 3D warping-based and the optical flow based object motion detection,
- wherein the 3D warping based object motion detection parameterizes, as to the direction and amplitude, the optical flow based object motion detection as to the regions which indicate lateral motion of objects relative to the ego-motion, and
- wherein only the regions in the 3D warping based object motion detection indicating a lateral motion relative to the ego-motion are processed selectively by the optical flow based object motion detection, and
- means for storing information on the detected dynamic objects and their measured motion parameters.

4. The system according to claim 3,
wherein the sensor comprises video cameras.

5. The system according to claim 3 or 4,
comprising a satellite-based navigation system for generating environmental information.

## Patentansprüche

1. Verfahren zum Ermitteln von dynamischen Objekten in einer optisch erfassten Szene eines Fahrerassistenzsystems eines Fahrzeugs oder Roboters mit Eigenbewegung, aufweisend die Schritte:
- zur Verfügung stellen optischer Signale einer Umgebung durch einen optischen Sensor, der dichte 3D-Weltkoordniatendaten liefert, wobei der optische Sensor an dem Fahrzeug oder dem Roboter mit Eigenbewegung angebracht ist,
- Ermitteln korrekter Bewegungen von dynamischen Objekten auf einem Eingangsfeld des optischen Sensors, basierend auf einem ermittelten optischen Fluss,
**gekennzeichnet durch** die Schritte
- Ermitteln der Bewegung des dynamischen Objekts **durch** Verwendung von 3D-Verzerrung (3D warping) auf Basis von vorausgesagten und erfassten dichten 3D-Weltkoordinatendaten, wobei die vorhergesagten dichten 3D-Weltkoordinatendaten basierend auf gemessenen dichten 3D-Weltkoordinatendaten, Daten, die die Eigenbewegung wiedergeben, und auf einer bereichsbasierten Nachbearbeitung und Modellierung innerhalb einer 3D-Gitterpunktwolke (3D voxel cloud) erzeugt werden, und
- Kombinieren der auf der 3D-Verzerrung basierenden und der auf dem optischen Fluss basierenden Obj ektbewegungserfassung,
- wobei die 3D-verzerrungsbasierte Objektbewegungserfassung im Hinblick auf die Richtung und Amplitude die auf dem optischen Fluss basierende Objektbewegungserfassung im Hinblick auf die Bereiche, die eine seitliche Bewegung von Objekten relativ zu der Eigenbewegung angeben, parametrisiert, und
- wobei nur diejenigen Bereiche in der 3D-verzerrungsbasierten Objektbewegungserfassung, die eine seitliche Bewegung relativ zu der Eigenbewegung angeben, **durch** die auf dem optischen Fluss basierende Objektbewegungserfassung ausgewählt verarbeitet werden, und
- Speichern von Information zu den erfassten dynamischen Objekten und ihrer gemessenen Bewegungsparameter.

2. Verfahren gemäß Anspruch 1, wobei die Informationen bezüglich der erfassten dynamischen Objekte zur Kollisionsvermeidung oder Wegplanung verwendet wird.

3. Fahrerassistenzsystem eines Fahrzeugs oder eines Roboters mit Eigenbewegung aufweisend:
- Mittel zum Bereitstellen visueller Signale einer Umgebung durch einen optischen Sensor, der dichte 3D-Weltkoordinatendaten liefert, wobei der optische Sensor an dem Fahrzeug oder dem Roboter mit Eigenbewegung angebracht ist,
- Berechnungsmittel, die korrekte Bewegungen an einem Eingangsfeld des optischen Sensors basierend auf einem erfassten optischen Fluss ermitteln,
**gekennzeichnet durch**
- Berechnungsmittel zum Ermitteln der Bewegung von dynamischen Objekten **durch** Verwendung von 3D-Verzerrung (3D warping) auf der Basis von vorhergesagten und erfassten dichten 3D-Weltkoordinatendaten, wobei die vorhergesagten dichten 3D-Weltkoordinatendaten basierend auf gemessenen dichten 3D-Weltkoordinatendaten, Daten, die die Eigenbewegung wiedergeben und einer bereichsbasierten Nachbearbeitung und Modellierung innerhalb einer 3D-Gitterpunktwolke (3D voxel cloud) erzeugt werden, und
- Berechnungsmittel zum Kombinieren der auf der 3D-Verzerrung basierenden und auf dem optischen Fluss basierenden Objektbewegungsermittlung,
- wobei die auf 3D-Verzerrung basierende Objektbewegungsermittlung im Hinblick auf die Richtung und Amplitude die auf dem optischen Fluss basierende Objektbewegungsermittlung im Hinblick auf Bereiche, die eine seitliche Bewegung von Objekten relativ zu der Eigenbewegung angeben, parametrisiert, und
- wobei nur diejenigen Bereiche in der 3D-verzerrungsbasierten Objektbewegungsermittlung, die eine seitliche Bewegung relativ zu der Eigenbewegung angeben, **durch** die auf dem optischen Fluss basierende Objektbewegungsermittlung ausgewählt verarbeitet werden,
- Mittel zum Speichern von Informationen über die erfassten dynamischen Objekte und ihre gemessenen Bewegungsparameter.

4. System gemäß Anspruch 3,
wobei der Sensor Videokameras umfasst.

5. System gemäß Anspruch 3 oder 4,
umfassend ein satellitenbasiertes Navigationssystem zum Erzeugen von Umgebungsinformationen.

## Revendications

1. Procédé de détection d'objets dynamiques dans une scène détectée visuellement d'un système d'aide à la conduite d'un véhicule ou robot doté d'un égo-mouvement, comprenant les étapes de :
- fourniture de signaux visuels d'un environnement par un capteur de vision délivrant des données de coordonnées universelles en 3D, ledit capteur de vision étant attaché au véhicule ou robot doté d'un égo-mouvement,
- détection du mouvement propre d'objets dynamiques sur un champ d'entrée du capteur de vision d'après un flux optique détecté,
**caractérisé par** les étapes de
- détection du mouvement d'objets dynamiques à l'aide d'une déformation en 3D sur la base de données de coordonnées universelles en 3D denses prédites et détectées, les données de coordonnées universelles en 3D denses prédites étant générées d'après des données de coordonnées universelles en 3D denses mesurées, des données représentant l'égo-mouvement et un post-traitement et une modélisation basés sur une région au sein d'un nuage de voxels en 3D, et
- combinaison de la détection de mouvement d'objet basée sur la déformation en 3D et basée sur le flux optique,
- dans lequel la détection de mouvement d'objet basée sur la déformation en 3D paramètre, concernant la direction et l'amplitude, la détection de mouvement d'objet basée sur le flux optique concernant les régions indiquant un mouvement latéral d'objets par rapport à l'égo-mouvement, et
- dans lequel seules les régions dans la détection de mouvement d'objet basée sur la déformation en 3D qui indiquent un mouvement latéral par rapport à l'égo-mouvement sont traitées sélectivement par la détection de mouvement d'objet basée sur le flux optique, et
- stockage d'informations à propos des objets dynamiques détectés et de leurs paramètres de mouvement mesurés.

2. Procédé selon la revendication 1,
dans lequel les informations à propos des objets dynamiques détectés sont utilisées pour l'évitement de collision ou la planification de trajet.

3. Système d'aide à la conduite d'un véhicule ou robot doté d'un égo-mouvement, comprenant :
- un moyen de fourniture de signaux visuels d'un environnement par un capteur de vision délivrant des données de coordonnées universelles en 3D denses, ledit capteur de vision étant attaché au véhicule ou robot doté d'un égo-mouvement,
- un moyen de calcul détectant un mouvement propre d'un champ d'entrée du capteur de vision basé sur un flux optique détecté,
**caractérisé par**
- un moyen de calcul pour détecter le mouvement d'objets dynamiques par l'utilisation d'une déformation en 3D sur la base de données de coordonnées universelles en 3D denses prédites et détectées, les données de coordonnées universelles en 3D denses prédites étant générées d'après des données de coordonnées universelles en 3D denses mesurées, des données représentant l'égo-mouvement et un post-traitement et une modélisation basés sur une région au sein d'un nuage de voxels en 3D, et
- un moyen de calcul pour combiner la détection de mouvement d'objet basée sur la déformation en 3D et basé sur le flux optique,
- dans lequel la détection de mouvement d'objet basée sur la déformation en 3D paramètre, concernant la direction et l'amplitude, la détection de mouvement d'objet basée sur le flux optique concernant les régions qui indiquent un mouvement latéral d'objets par rapport à l'égo-mouvement, et
- dans lequel seules les régions dans la détection de mouvement d'objet basée sur la déformation en 3D indiquant un mouvement latéral par rapport à l'égo-mouvement sont traitées sélectivement par la détection de mouvement d'objet basée sur le flux optique, et
- un moyen de stockage d'informations sur les objets dynamiques détectés et leurs paramètres de mouvement mesurés.

4. Système selon la revendication 3,
dans lequel le capteur comprend des caméras vidéo.

5. Système selon la revendication 3 ou 4,
comprenant un système de navigation par satellite permettant de générer des informations environnementales.
